**Europäisches Patentamt**

**European Patent Office**

**Office européen des brevets**

(11) Numéro de publication : **0 320 386 B1**

(12) **FASCICULE DE BREVET EUROPEEN**

(45) Date de publication du fascicule du brevet :
**12.08.92 Bulletin 92/33**

(51) Int. Cl.$^5$ : **B01D 59/34**

(21) Numéro de dépôt : **88403117.0**

(22) Date de dépôt : **08.12.88**

(54) **Dispositif de répartition des faisceaux lasers utilisés lors d'une réaction sélective dans un procédé de séparation isotopique par lasers.**

(30) Priorité : **10.12.87 FR 8717233**

(43) Date de publication de la demande :
**14.06.89 Bulletin 89/24**

(45) Mention de la délivrance du brevet :
**12.08.92 Bulletin 92/33**

(84) Etats contractants désignés :
**DE GB**

(56) Documents cités :
**AU-B- 537 265**
**FR-A- 2 591 510**

(73) Titulaire : **COMMISSARIAT A L'ENERGIE ATOMIQUE Etablissement de Caractère Scientifique Technique et Industriel 31/33, rue de la Fédération F-75015 Paris (FR)**

(72) Inventeur : **Michon, Maurice 30, Allée des Vergers F-91210 Draveil (FR)**
Inventeur : **Rigny, Paul 16, Avenue Charles Peguy F-92330 Sceaux (FR)**

(74) Mandataire : **Mongrédien, André et al c/o BREVATOME 25, rue de Ponthieu F-75008 Paris (FR)**

## Description

La présente invention a pour objet un dispositif de répartition des faisceaux lasers utilisés lors d'une réaction sélective dans un procédé de séparation isotopique par lasers.

L'invention s'applique aux réactions sélectives telle la séparation isotopique de l'uranium par lasers.

Dans un dispositif de séparation isotopique basé sur l'excitation sélective d'une espèce suivie de sa photoionisation, la faiblesse de la section efficace de photoionisation pose un problème capital. Le faisceau laser à la longueur d'onde $\lambda_i$ de photoionisation est beaucoup moins absorbé que celui (ou ceux) à la longueur d'onde $\lambda_e$ d'excitation sélective. Par ailleurs, pour conserver une bonne sélectivité, on ne peut opérer avec une puissance trop importante du faisceau d'excitation sélective; en effet, on aurait une perte de sélectivité due par exemple à l'élargissement spectral par saturation ou à des transitions à plusieurs photons. On ne peut donc pas maintenir tout le long de leur parcours dans l'enceinte la présence simultanée des deux faisceaux. Il en résulte que le faisceau d'ionisation est très mal utilisé, son énergie étant gaspillée dans la dernière partie du trajet où le faisceau d'excitation sélective est très atténué. Afin d'utiliser au mieux l'énergie des différents faisceaux, on peut adapter leurs polarisations aux transitions correspondantes et d'autre part leur faire suivre des parcours différents. On renvoie le faisceau à la longueur d'onde $\lambda_i$ sur plusieurs passages à l'intérieur de l'enceinte de réaction, un faisceau à la longueur d'onde $\lambda_e$ est injecté dans l'enceinte à chaque passage. Sur la longueur d'un passage dans l'enceinte le faisceau à la longueur d'onde $\lambda_e$ est totalement absorbé.

Dans les montages connus de répartition des faisceaux lasers, les faisceaux d'excitation sélective et de photoionisation ont nécessairement des polarisations différentes dans la zone d'irradiation. Ces polarisations sont perpendiculaires si elles sont rectilignes, ou circulaires, droite et gauche.

On trouve des exemples de tels dispositifs dans le brevet français FR-A-2 591 510 du Commissariat à L'Energie Atomique.

Selon les transitions atomiques choisies, le fait que les polarisations des faisceaux soient fixées par le montage peut être défavorable. Le but de la présente invention est de permettre une meilleure utilisation de l'énergie des faisceaux par le libre choix des polarisations sur chacun des faisceaux indépendamment les unes des autres et grâce à une bonne répartition de l'intensité des faisceaux dans l'enceinte de réaction.

De façon plus précise, l'invention a pour objet un dispositif de répartition des faisceaux lasers utilisés lors d'une réaction sélective dans un procédé de type séparation isotopique par lasers comprenant :

– dans une enceinte, un corps dont on veut extraire une espèce, ce corps étant sous forme d'un écoulement de vapeur,

– des sources lasers délivrant des impulsions lasers suivant des faisceaux S1, ..., Sn, n étant un entier au moins égal à 1, aux longueurs d'ondes $\lambda_1$, ..., $\lambda_n$ d'excitation sélective et suivant un faisceau St à la longueur d'onde $\lambda_t$ permettant une transformation de cette espèce excitée,

– des moyens de renvoi des faisceaux permettant plusieurs passages à travers l'enceinte.

Ce dispositif se caractérisé en ce qu'il comporte :

– des miroirs à réflexion partielle, disposés de telle sorte que les faisceaux S1, ..., Sn, St transmis et réfléchis soient superposés. Une première partie de ces faisceaux est dirigée vers l'enceinte, une autre vers le miroir à réflexion partielle suivant.

L'utilisation de ces miroirs à réflexion partielle permet d'éviter le recours à tout élément polariseur (tel un prisme de Glan) pour superposer les faisceaux.

– des moyens de renvoi permettant d'ajuster la longueur du trajet dans l'enceinte entre deux miroirs à réflexion partielle,

– des moyens de retard optique permettant la synchronisation des impulsions des faisceaux provenant d'un miroir à réflexion partielle et dirigés vers le suivant avec les impulsions des faisceaux ayant traversé l'enceinte.

Selon un mode préféré de réalisation de ce dispositif, les miroirs à réflexion partielle sont en nombre suffisant pour qu'aprés la dernière traversée de l'enceinte par le faisceau lumineux la fluence à la longueur d'onde $\lambda_t$ soit égale à la fluence à saturation pour cette longueur d'onde. En d'autres termes, le nombre de photons par impulsion par unité de surface à la longueur d'onde considérée (fluence) est égal, après traversée du dispositif à l'inverse de la section efficace d'interaction (fluence à saturation).

Selon un mode préféré de réalisation de ce dispositif, les moyens de renvoi permettent d'ajuster la longueur du trajet dans l'enceinte, entre deux miroirs à réflexion partielle, de manière telle que la fluence à l'une des longueurs d'onde $\lambda_1$, ..., $\lambda_n$ au moins soit égale à la fluence à saturation.

Le choix du coefficient de réflexion des miroirs à réflexion partielle, de la longueur du trajet dans l'enceinte entre deux miroirs, et du nombre de ces miroirs permet d'utiliser au mieux l'énergie des différents faisceaux lasers.

Selon une variante de réalisation de l'invention, le dispositif comprend :

– dans une enceinte, un corps dont on veut extraire une espèce, ce corps étant sous forme d'un écoulement de vapeur,

– des sources lasers délivrant des impulsions lasers suivant des faisceaux S1, ..., Sn, n étant un entier au moins égal à 1, aux longueurs d'onde λ1, ..., λn d'excitation sélective et suivant un faisceau St à la longueur d'onde λt permettant une transformation de cette espèce excitée,

– des moyens de renvoi des faisceaux permettant plusieurs passages à travers l'enceinte.

Ce dispositif est caractérisé en ce qu'il comporte au moins deux étages.

Chaque étage comprend :

– une source laser Se, e étant un entier compris entre 1 et n, délivrant des impulsions à la longueur d'onde λe,

– des miroirs à réflexion partielle disposés de telle sorte que, à l'exception du faisceau Se, les faisceaux S1, ..., Sn, St transmis et réfléchis soient superposés, une partie de ces faisceaux étant dirigée vers un miroir à réflexion partielle, une autre partie vers l'étage suivant,

– des miroirs à réflexion partielle disposés de telle sorte que les faisceaux S1, ..., Se, ..., Sn, St transmis et réfléchis soient superposés, une partie de ces faisceaux étant dirigée vers l'enceinte, une autre vers le miroir suivant,

– des moyens de renvoi permettant d'ajuster la longueur du trajet dans l'enceinte, entre deux miroirs à réflexion partielle,

– des moyens de retard optique permettant la synchronisation des impulsions provenant d'un miroir à réflexion partielle et dirigé vers le suivant avec les impulsions ayant traversé l'enceinte,

– des moyens de synchronisation des impulsions provenant d'un étage avec celles délivrées par la source laser Se de l'étage suivant.

Ce dispositif se caractérisé d'autre part en ce que les faisceaux résiduels, après traversée d'un étage, sont injectés dans l'étage suivant.

Selon un mode préféré de réalisation, le nombre d'étages est suffisant pour que, après la dernière traversée de l'enceinte de réaction par le faisceau lumineux, la fluence à la longueur d'onde λt soit égale à la fluence à saturation pour cette longueur d'onde.

Selon un mode préféré de réalisation, les moyens de renvoi permettent d'ajuster la longueur du trajet dans l'enceinte, entre deux miroirs à réflexion partielle, de manière telle que la fluence à la longueur d'onde λe soit égale à la fluence à saturation pour cette longueur d'onde.

D'autres caractéristiques et avantages de l'invention ressortiront mieux de la description qui va suivre, donnée à titre purement illustratif et nullement limitatif, en référence aux figures annexées dans lesquelles :

– la figure 1 représente un arrangement connu de dispositif de séparation isotopique par lasers ;

– la figure 2 représente une variante connue du dispositif décrit figure 1 ;

– la figure 3 représente une autre variante connue du dispositif décrit figure 1 ;

– la figure 4 représente le dispositif selon l'invention ;

– la figure 5 représente une variante du dispositif selon l'invention.

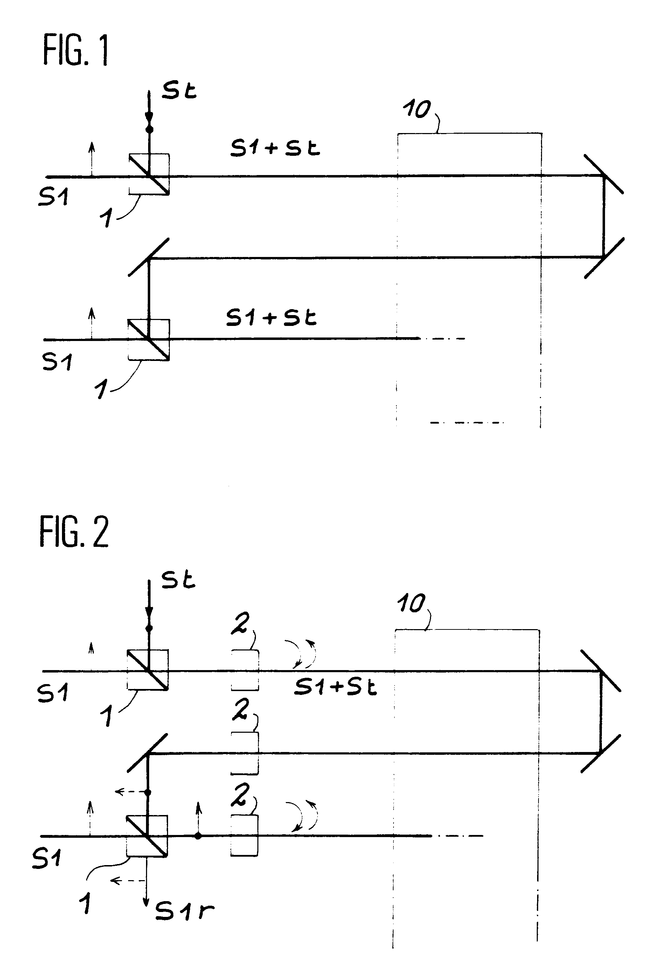

La figure 1 décrit le montage connu à la base des dispositifs de séparation isotopique par lasers. Des faisceaux S1 et St, respectivement excitateur et photoionisant, de polarisation perpendiculaire sont superposés et dirigés vers une enceinte de réaction 10 par l'intermédiaire d'un prisme de Glan 1. Après de multiples passages dans l'enceinte, le faisceau S1 est absorbé. Le faisceau St est alors envoyé vers un prisme de Glan 1. Un nouveau faisceau S1 est fourni par une source laser (non représentée). Après traversée du prisme de Glan, les faisceaux S1+St sont envoyés dans l'enceinte et ainsi de suite jusqu'à absorption complète du faisceau St.

La figure 2 décrit une variante connue du dispositif précédent. Des lames quart d'onde 2 permettent de rendre circulaires les polarisations des faisceaux S1 et St. Inversement, une lame quart d'onde rend rectiligne la polarisation du faisceau St à l'entrée du second prisme de Glan. Ce dispositif permet d'éliminer tout faisceau S1r résiduel dans le second faisceau S1+St.

En effet après passage par la lame quart d'onde le faisceau S1r reprend une polarisation rectiligne perpendiculaire à la polarisation du faisceau St. Le faisceau résiduel S1r est donc transmis par le prisme de Glan et non réfléchi comme le faisceau St. Ce faisceau résiduel, s'il était présent, viendrait interférer avec le nouveau faisceau S1+St.

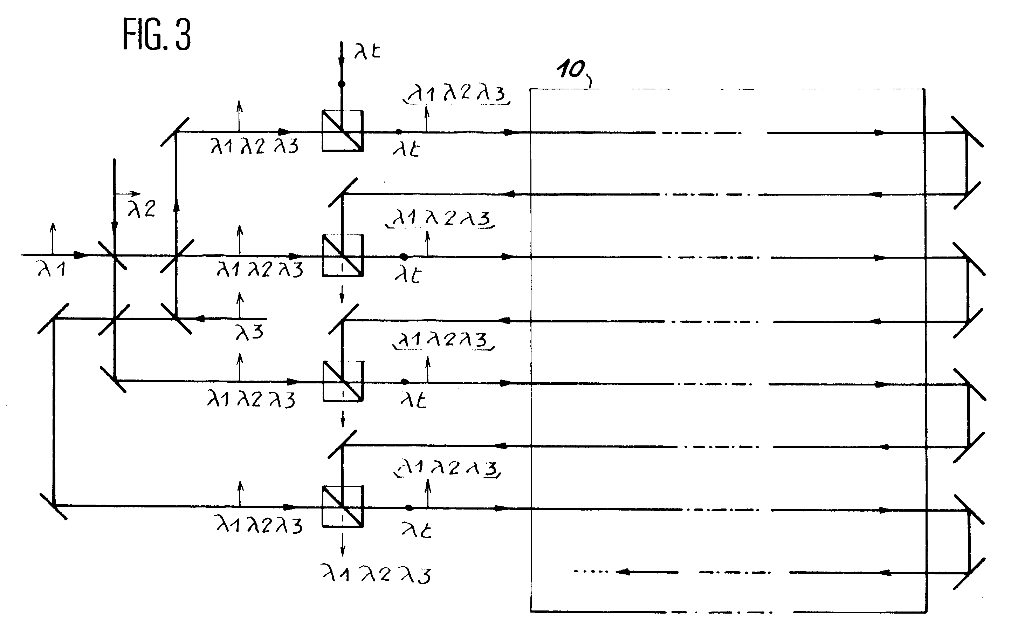

La figure 3 représente une autre variante du dispositif représenté figure 1. Ce cas de figure peut être appliqué à l'uranium. Les faisceaux d'excitation sélective S1, S2, S3 aux longueurs d'onde respectives λ1, λ2, λ3 sont regroupés suivant la même polarisation et le faisceau St de photoionisation a une autre polarisation.

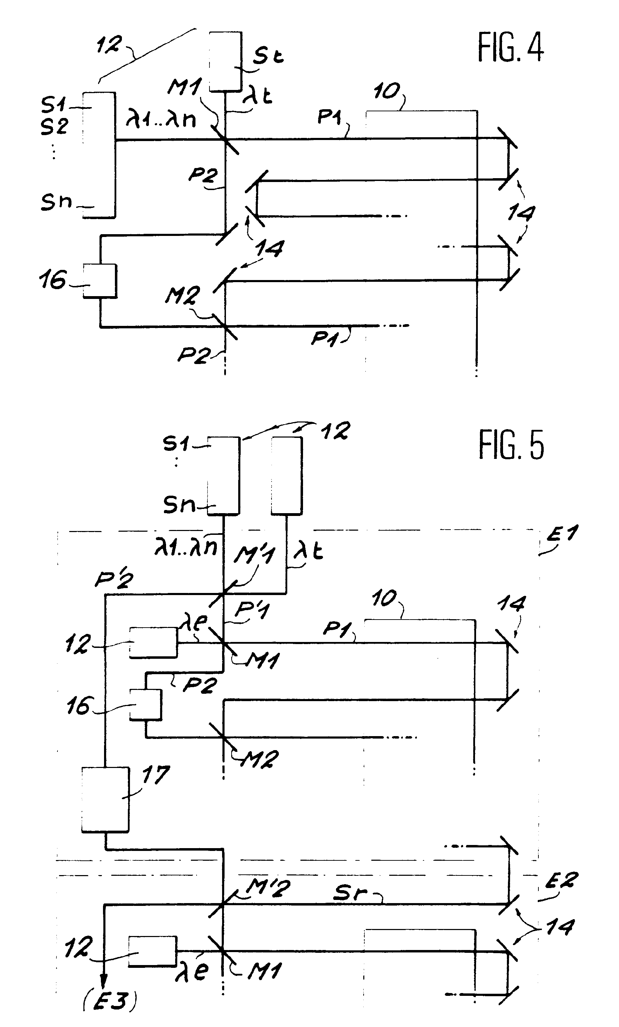

La figure 4 représente le dispositif conforme à l'invention. Des sources lasers 12 délivrent des impulsions lumineuses à des longueurs d'onde λ1, ..., λn suivant des faisceaux S1, ..., Sn, et un faisceau St à la longueur d'onde λt. Ces faisceaux S1, ..., Sn, St sont réfléchis et transmis par un premier miroir à réflexion partielle M1. Une partie P1 de ces faisceaux est dirigée vers une enceinte de réaction 10. Cette partie P1 effectue plusieurs passages dans l'enceinte.

Des moyens de renvoi 14 permettent d'ajuster la longueur de ce trajet, puis de diriger le faisceau P1 vers un second miroir à réflexion partielle M2. Une partie P2 des faisceaux S1, ..., Sn, St transmis et réfléchis par le miroir M1 est dirigée vers le second miroir à réflexion partielle M2. La synchronisation des impulsions issues des parties P1 et P2 est assurée par des moyens de retard optique 16. A hauteur du miroir M2 une partie des impulsions sera dirigée vers l'enceinte et l'autre vers un miroir à réflexion partielle M3 (non représenté).

La figure 5 représente une variante du dispositif selon l'invention. Des sources lasers 12 sont à l'origine des faisceaux lumineux S1, ..., Sn, St et Se aux longueurs d'onde λ1, ..., λn, λt et λe. Le dispositif comprend au moins deux étages Ei, i est un entier au moins égal à 1.

Chaque étage Ei comprend au moins un miroir M'1 à réflexion partielle qui transmet et réfléchit les faisceaux S1, ...,Sn, St. Chaque étage Ei comprend encore une source laser 12 délivrant un faisceau Se à la longueur d'onde λe la plus absorbée lors du processus de réaction sélective. A l'intérieur de chaque étage une partie P'1 des faisceaux s1, ..., Sn, St transmis et réfléchis par M'1 est dirigée vers un miroir à réflexion partielle M1. Cette partie P'1 et le faisceau Se sont réfléchis et transmis par M1. Une partie P1 de ces faisceaux est dirigée vers une enceinte de réaction 10. Cette partie P1 effectue plusieurs passages dans l'enceinte. Des moyens de renvoi 14 permettent d'ajuster la longueur de ce trajet, puis de diriger le faisceau P1 vers un second miroir à réflexion partielle M2. Une partie P2 des faisceaux Se et P'1 transmis et réfléchis par le miroir M1 est dirigée vers le second miroir à réflexion partielle M2. La synchronisation des impulsions issues des parties P1 et P2 est assurée par des moyens de retard optique 16. A hauteur du miroir M2, une partie des impulsions est dirigée vers l'enceinte 10 et l'autre vers un miroir à réflexion partielle M3 (non représenté) et ainsi de suite. Le faisceau résiduel Sr n'ayant par été absorbé après ces multiples traversées de miroirs à réflexion partielle et passages à travers l'enceinte de réaction 10 est dirigé, grâce à des moyens de renvoi 14 vers l'étage Ei+1. L'étage Ei comprend en dernier lieu des moyens 17 qui permettent de diriger une partie P'2 des faisceaux S1, ..., Sn, St transmis et réfléchis par le miroir M'i vers l'étage Ei+1. Ces moyens 17 permettent aussi la synchronisation des impulsions de la partie P'2 avec les impulsions du faisceau Sr.

## Revendications

1. Dispositif de répartition des faisceaux lasers utilisés lors d'une réaction sélective dans un procédé de séparation isotopique par lasers comprenant :
   – dans une enceinte (10), un corps dont on veut extraire une espèce, ce corps étant sous forme d'un écoulement de vapeur,
   – des sources lasers (12) délivrant des impulsions lasers suivant des faisceaux S1, ..., Sn, n étant un entier au moins égal à 1, aux longueurs d'ondes λ1, ..., λn d'excitation sélective et suivant un faisceau St à la longueur d'onde λt permettant une transformation de cette espèce excitée,
   – des moyens de renvoi (14) des faisceaux permettant plusieurs passages à travers l'enceinte (10),
caractérisé en ce qu'il comporte :
   – des miroirs (Mi) à réflexion partielle, i entier au moins égal à 1, disposés de telle sorte que les faisceaux S1, ..., Sn, St transmis et réfléchis soient superposés, une première partie (P1) de ces faisceaux est dirigée vers l'enceinte (10), une autre (P2) vers le miroir à réflexion partielle suivant,
   – des moyens (16) de retard optique permettant la synchronisation des impulsions des faisceaux (P2) provenant d'un miroir (Mi) à réflexion partielle et dirigés vers le miroir (Mi+1) avec les impulsions des faisceaux ayant traversé l'enceinte (10),
   – des moyens de renvoi (14) étant disposés pour permettre d'ajuster la longueur du trajet dans l'enceinte (10) entre deux miroirs (Mi) et (Mi+1).

2. Dispositif selon la revendication 1, caractérisé en ce que les miroirs (Mi) à réflexion partielle sont en nombre suffisant pour qu'après la dernière traversée de l'enceinte (10) par le faisceau lumineux la fluence à la longueur d'onde λt soit égale à la fluence à saturation pour cette longueur d'onde.

3. Dispositif selon la revendication 1, caractérisé en ce que les moyens de renvoi (14) permettent d'ajuster la longueur du trajet dans l'enceinte (10) entre deux miroirs (Mi et Mi+1) de manière telle que la fluence à l'une des longueurs d'onde λ1, ...,λn au moins soit égale à la fluence à saturation.

4. Dispositif de répartition des faisceaux lasers utilisés lors d'une réaction sélective dans un procédé de séparation isotopique par lasers comprenant :
   – dans une enceinte (10), un corps dont on veut extraire une espèce, ce corps étant sous forme d'un écoulement de vapeur,
   – des sources lasers (12) délivrant des impulsions lasers suivant des faisceaux S1, ..., Sn, n étant un entier au moins égal à 1, aux longueurs d'onde λ1, ..., λn d'excitation sélective et suivant un faisceau St à la longueur d'onde λt permettant une transformation de cette espèce excitée,
   – des moyens de renvoi (14) des faisceaux permettant plusieurs passages à travers l'enceinte (10), caractérisé en ce qu'il comporte au moins deux étages, chaque étage (Ei) comprenant :
   – une source laser Se, e étant un entier compris entre 1 et n, délivrant des impulsions à la longueur d'onde λe,
   – des miroirs à réflexion partielle (M'j), j étant un entier au moins égal à 1, disposés de telle sorte que, à l'exception du faisceau Se, les faisceaux S1, ..., Sn, St transmis et réfléchis soient superposés, une partie (P'1) de ces faisceaux étant dirigée vers un miroir (Mk), l'autre partie (P'2) vers l'étage (Ei+1) suivant,
   – des miroirs (Mk) à réflexion partielle, k étant un entier au moins égal à 1, disposés de telle sorte que les faisceaux S1, ..., Se, ... Sn, St transmis et réfléchis soient superposés, une partie (P1) de ces faisceaux étant dirigée vers l'enceinte (10), une autre (P2) vers le miroir suivant (Mk+1),

– des moyens de renvoi (14) permettant d'ajuster la longueur du trajet dans l'enceinte (10), entre deux miroirs (Mk et Mk+1),

– des moyens (16) de retard optique permettant la synchronisation des impulsions des faisceaux provenant d'un miroir à réflexion partielle (Mk) et dirigé vers le suivant (Mk+1) avec les impulsions ayant traversé l'enceinte (10),

– des moyens (17) de synchronisation des impulsions provenant d'un étage (Ei) avec celles délivrées par la source laser Se à la longueur d'onde λe de l'étage (Ei+1).

5. Dispositif selon la revendication 4, caractérisé en ce que les faisceaux résiduels, après traversée d'un étage (Ei), sont injectés dans l'étage (Ei+1).

6. Dispositif selon l'une quelconque des revendications 4 et 5, caractérisé en ce que les étages (Ei) sont en nombre suffisant pour que, après la dernière traversée de l'enceinte (10) par les faisceaux lumineux, la fluence à la longueur d'onde λt soit égale à la fluence à saturation pour cette longueur d'onde.

7. Dispositif selon l'une quelconque des revendications 4, 5 et 6, caractérisé en ce que les moyens de renvoi (14) permettent d'ajuster la longueur du trajet dans l'enceinte (10) entre deux miroirs (Mk et Mk+1) de manière telle que la fluence à la longueur d'onde λe soit égale à la fluence à saturation pour cette longueur d'onde.

**Claims**

1. Apparatus for the distribution of laser beams used during a selective reaction in a process for isotope separation by lasers comprising
   – in an enclosure (10), a material whereof one species is to be extracted, said material being in the form of a vapour flow,
   – laser sources (12) supplying laser pulses along beams S1...Sn, n being an integer at least equal to 1, at wavelength λ1, ... λn for selective excitation and along a beam S2 at wavelength λt permitting a transformation of said excited species,
   – means for the return (14) of the beams permitting several passages through the enclosure (10), characterized in that it comprises
   – partial reflection mirrors (Mi) arranged in such a way that the beams S1...Sn,St transmitted and reflected are superimposed, a first part (P1) of said beams being directed towards the enclosure (10) and another part (P2) towards the following partial reflection mirror,
   – optical delay means (16) permitting the synchronization of the pulses of beams (P2) from a partial reflection mirror (Mi) and directed towards the mirror (Mi+1) with pulses of beams having traversed enclosure (10)
   – and return means (14) are provided to adjust the length of the path in enclosure (10) between two mirrors (Mi) and (Mi+1).

2. Apparatus according to claim 1, characterized in that there is an adequate number of partial reflection mirrors (Mi) to ensure that following the final passage through enclosure (10) by the light beam, the fluence at wavelength λt is equal to the saturation fluence for said wavelength.

3. Apparatus according to claim 1, characterized in that the return means (14) make it possible to adjust the length of the path in enclosure (10) between two mirrors (Mi) and (Mi+1), in such a way that the fluence at one of the wavelengths λ1 ... λn is at least equal to the saturation fluence.

4. Apparatus for the distribution of laser beams used during a selective reaction in a process for isotope separation by lasers comprising,
   – in an enclosure (10), a material from which it is wished to extract one species, said material being in the form of a vapour flow,
   – laser sources (12) supplying laser pulses along beams S1 ... Sn, n being an integer at least equal to 1, at selective excitation wavelengths λ1 ...λn and along a beam St at wavelength λt permitting a transformation of said excited species,
   – means (14) for the return of the beams permitting several passages through the enclosure (10), characterized in that it comprises at least two stages, each stage (Ei) comprising:
   – a laser source Se, e being an integer between 1 and n, supplying pulses at wavelengths λe,
   – partial reflection mirrors (M'j), j being an integer at least equal to 1, arranged in such a way that, with the exception of beam Se, the transmitted and reflected beams S1 ... Sn, St are superimposed, one part (P'1) of said beams being directed to a mirror (Mk), the other part (P'2) being directed to the following stage (Ei+1),
   – partial reflection mirrors (Mk), k being an integer at least equal to 1, arranged in such a way that the transmitted and reflected beams S1 ... Se ... Sn,St are superimposed, part (P1) of the beams being directed to the enclosure (10) and another part (P2) to the following mirror (Mk+1),
   – return means (14) making it possible to adjust the length of the path in enclosure (10) between two mirrors (Mk and Mk+1),
   – optical delay means (16) permitting the synchronization of the pulses of the beams from a partial reflection mirror (mk) and directed to the following one (mk+1) with the pulses having traversed the enclosure (10) and
   – means (17) for the synchronization of the pulses from one stage (Ei) with those supplied by the laser source Se at wavelength $\lambda e$ from stage (Ei+1).

5. Apparatus according to claim 4, characterized in that the residual beams, after passing through a stage (Ei), are injected into stage (Ei+1).

6. Apparatus according to either of the claims 4 and 5, characterized in that there is an adequate number of stages (Ei) so that, following the final passage through enclosure (10) by the light beams, the fluence at wavelength $\lambda t$ is equal to the saturation fluence for said wavelength.

7. Apparatus according to any one of the claims 4,5 and 6, characterized in that the return means (14) make it possible to adjust the length of the path in the enclosure (10) between two mirrors (Mk and Mk+1), in such a way that the fluence at wavelength $\lambda e$ is equal to the saturation fluence for said wavelength.


**Patentansprüche**

1. Vorrichtung zur Aufteilung von Laserstrahlen, die bei einer selektiven Reaktion in einem Isotopentrennverfahren mit Lasern verwendet werden, mit:
   – in einer ersten Hülle (10) einem Körper, von dem man eine Sorte entnehmen möchte, wobei sich der Körper in der Form eines Dampfstromes befindet,
   – Laserquellen (12), die Laserimpulse erzeugen, die Strahlen S1, ..., Sn, wobei n eine ganze Zahl wenigstens gleich 1 ist, mit Wellenlängen $\lambda 1$, ..., $\lambda n$ zur selektiven Anregung und einem Strahl St mit einer Wellenlänge $\lambda t$ folgen, die eine Transformation dieser angeregten Sorte erlaubt,
   – Vorrichtungen zum Zurücksenden (14) der Strahlen, die mehrere Durchgänge durch die Hülle (10) ermöglichen, dadurch gekennzeichnet, daß sie umfaßt:
   – teilweise reflektierende Spiegel (Mi), wobei i eine ganze Zahl wenigstens gleich 1 ist, die so angeordnet sind, daß die übertragenen und reflektierten Strahlen S1, ..., Sn, St überlagert werden, wobei ein erster Teil (P1) dieser Strahlen auf die Hülle (10) gerichtet ist und ein weiterer Teil (P2) auf den folgenden, teilweise reflektierenden Spiegel gerichtet ist,
   – Vorrichtungen (16) zur optischen Verzögerung, die die Synchronisation der Strahlimpulse (P2), die von einem teilweise reflektierenden Spiegel (Mi) kommen und auf den Spiegel (Mi+1) gerichtet sind, mit Impulsen der Stahlen, die die Hülle durchquert haben, ermöglichen,
   – wobei Vorrichtungen zum Zurücksenden (14) angeordnet sind, um die Einstellung der Länge des Weges in der Hülle zwischen zwei Spiegeln (Mi) und (Mi+1) zu ermöglichen.

2. Vorrichtung nach Anspruch 1, dadurch gekennzeichnet, daß die teilweise reflektierenden Spiegel (Mi) in ausreichender Zahl vorhanden sind, damit nach der letzten Durchquerung der Hülle (10) durch den Lichtstrahl die Fluenz bei der Wellenlänge $\lambda t$ gleich der Sättigungsfluenz für diese Wellenlänge ist.

3. Vorrichtung nach Anspruch 1, dadurch gekennzeichnet, daß die Rücksendevorrichtungen (14) erlauben, die Weglänge in der Hülle (10) zwischen zwei Spiegeln (Mi und Mi+1) derart einzustellen, daß die Fluenz wenigstens einer der Wellenlängen $\lambda 1$, ...,$\lambda n$ gleich der Sättigungsfluenz ist.

4. Vorrichtung zur Aufteilung von Laserstrahlen, die bei einer selektiven Reaktion in einem Isotopentrennverfahren mit Lasern verwendet werden, mit:
   – in einer ersten Hülle (10) einem Körper, von dem man eine Sorte entnehmen möchte, wobei sich der Körper in der Form eines Dampfstromes befindet,
   – Laserquellen (12), die Laserimpulse erzeugen, die Strahlen S1, ..., Sn, wobei n eine ganze Zahl wenigstens gleich 1 ist, mit Wellenlängen $\lambda 1$, ..., $\lambda n$ zur selektiven Anregung und einem Strahl St mit einer Wellenlänge $\lambda t$ folgen, die eine Transformation dieser angeregten Sorte erlaubt,
   – Vorrichtungen zum Zurücksenden (14) der Strahlen, die mehrere Durchgänge durch die Hülle (10) ermöglichen,
   dadurch gekennzeichnet, daß sie wenigstens zwei Stufen umfaßt, wobei jede Stufe (Ei) aufweist:
   – eine Laserquelle Se, wobei e eine ganze Zahl zwischen 1 und n ist, die Pulse mit der Wellenlänge $\lambda e$ erzeugt,
   – teilweise reflektierende Spiegel (M'j), wobei j eine ganze Zahl wenigstens gleich 1 ist, die so angeordnet sind, daß mit Ausnahme des Strahles Se die übertragenen und reflektierten Strahlen S1, ..., Sn, St überlagert werden, wobei ein erster Teil (P'1) dieser Strahlen auf einen Spiegel (Mk) gerichtet ist und ein weiterer Teil (P'2) auf die folgende Stufe (Ei+1) gerichtet ist,
   – teilweise reflektierende Spiegel (Mk), wobei k eine ganze Zahl wenigstens gleich 1 ist, die so angeordnet sind, daß die übertragenen und reflektierten Strahlen S1, ..., Se, ..., Sn, St überlagert werden, wobei ein erster Teil (P1) dieser Strahlen auf die Hülle (10) gerichtet ist und ein weiterer Teil (P2) auf den folgenden Spiegel (Mk+1) gerichtet ist,
   – Vorrichtungen zum Zurücksenden (14), um die Einstellung der Länge des Weges in der Hülle zwischen zwei Spiegeln (Mk) und (Mk+1) zu ermöglichen,
   – Vorrichtungen (16) zur optischen Verzögerung, die die Synchronisation der Strahlimpulse, die von einem teilweise reflektierenden Spiegel (Mk) kommen und auf den Spiegel (Mk+1) gerichtet sind, mit den Impulsen der Strahlen, die die Hülle (10) durchquert haben, ermöglichen,

– Vorrichtungen (17) zur Synchronisation der Impulse, die von einer Stufe (Ei) kommen, mit denen, die von der Laserquelle Se mit der Wellenlänge λe der Stufe (Ei+1) kommen.

5. Vorrichtung nach Anspruch 4, dadurch gekennzeichnet, daß die nach dem Durchgang durch eine Stufe (Ei) verbliebenen Strahlen wieder in die Stufe (Ei+1) eingestrahlt werden.

6. Vorrichtung nach einem der Ansprüche 4 und 5, dadurch gekennzeichnet, daß die Stufen (Ei) in ausreichender Zahl vorhanden sind, damit nach der letzten Durchquerung der Hülle (10) durch den Lichtstrahl die Fluenz bei der Wellenlänge λt gleich der Sättigungsfluenz für diese Wellenlänge ist.

7. Vorrichtung nach einem der Ansprüche 4, 5 und 6, dadurch gekennzeichnet, daß die Rücksendevorrichtungen (14) erlauben, die Weglänge in der Hülle (10) zwischen zwei Spiegeln (Mk und Mk+1) derart einzustellen, daß die Fluenz der Wellenlänge λe gleich der Sättigungsfluenz für diese Wellenlänge ist.

FIG. 1

FIG. 2

FIG. 3

EP 0 320 386 B1

FIG. 4

FIG. 5